(19) Europäisches Patentamt
European Patent Office
Office européen des brevets

(11) **EP 4 444 220 B1**

(12) **EUROPEAN PATENT SPECIFICATION**

(45) Date of publication and mention
of the grant of the patent:
**15.10.2025 Bulletin 2025/42**

(21) Application number: **22835316.5**

(22) Date of filing: **09.12.2022**

(51) International Patent Classification (IPC):
***A61C 9/00*** (2006.01)   ***A61C 13/00*** (2006.01)

(52) Cooperative Patent Classification (CPC):
**A61C 9/0053; A61C 13/0004**

(86) International application number:
**PCT/EP2022/085189**

(87) International publication number:
**WO 2023/105045 (15.06.2023 Gazette 2023/24)**

(54) **SYSTEMS AND METHODS FOR DESIGNING A DENTAL PROSTHESIS**

SYSTEME UND VERFAHREN ZUM ENTWERFEN EINER ZAHNPROTHESE

SYSTÈMES ET PROCÉDÉS DE CONCEPTION D'UNE PROTHÈSE DENTAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.12.2021 EP 21213700**

(43) Date of publication of application:
**16.10.2024 Bulletin 2024/42**

(73) Proprietor: **3Shape A/S
1060 Copenhagen K (DK)**

(72) Inventors:
• **HOLLENBECK, Karl-Josef
1060 Copenhagen K (DK)**
• **ÍSLEIFSSON, Bárdur
1060 Copenhagen K (DK)**
• **ASK, Erik
1060 Copenhagen K (DK)**
• **HANSEN, Peter Steen
1060 Copenhagen K (DK)**

(74) Representative: **Guardian
IP Consulting I/S
Diplomvej, Building 381
2800 Kgs. Lyngby (DK)**

(56) References cited:
**US-A1- 2007 015 111     US-A1- 2021 059 796
US-A1- 2021 321 872**

## Description

## Technical field

The present disclosure generally relates to a system and method for designing a dental prosthesis. In particular, the present disclosure relates to a method for designing a dental prosthesis based on a digital 3D representation, wherein at least a part of the surface of the dental prosthesis is determined independent of any knowledge or estimate of a hidden part of the preparation surface.

## Background

Prosthodontics is the dental specialty concerned with the design, manufacture and fitting of artificial replacements (prostheses) for teeth. In preparing for a dental prosthesis, a dental practitioner may grind down existing dentition to create a tooth preparation for mounting a dental prosthesis. The surface of this tooth preparation is known as the preparation surface. The dentist may further shape the tooth preparation to ensure that the prosthesis can be designed with sufficient thickness. The lower outer boundary of the preparation surface is typically denoted the preparation line. When the prosthesis is mounted on the preparation, the lower edge of the prosthesis is also demarcated by this line. If the seal between the prosthesis and the preparation is not good, there is a risk that gaps will collect dirt and bacteria, which can lead to further tooth decay and that the prosthesis will not last long. For that reason, it is important to achieve a good fit of the prosthesis at the preparation line.

In digital dentistry, a digital 3D model of the tooth preparation and the surrounding dentition may be obtained. The digital model may be acquired using an intraoral scanning device. The prosthesis may then be digitally designed and manufactured using computer aided design and manufacturing (CAD/CAM). The prosthesis is typically manufactured in a mill. The need for a good seal between prosthesis and preparation, as discussed above, typically implies a need for a high accuracy 3D scan in the area surrounding the preparation line.

In order to achieve an aesthetically pleasing result, the preparation line is often located sub-gingivally, i.e., slightly below the surface of the gingiva. By doing so, the boundary of the prosthesis is hidden by the gingiva when mounted on the preparation. One problem with this approach is that the preparation line, or parts of the preparation line, may become hidden/obscured by e.g. the gingiva, which consequently means that in some cases the entire preparation line is not visible in the corresponding digital 3D model. To circumvent this problem, the surrounding gingiva is sometimes retracted, such that the preparation surface itself can be scanned. The dentist performs this retraction by pushing retraction cord(s) into the sulcus. The retraction cord is then removed immediately before scanning such that the gingiva does not have time to move back to a position where it covers the preparation line. It is often an issue that the gingiva collapse onto the preparation before the scan is performed, preventing the acquisition of a scan wherein the preparation line is visible. Another problem with this approach is that the procedure is unpleasant to the patient.

Another procedure to mitigate the problem of collapsed gingiva or foreign objects is to take an impression without any physical remedy, i.e., with parts of the preparation surface hidden. The hidden parts of the preparation surface may in some cases be estimated afterwards. Traditionally, dental technicians have used their experience to physically remove material from a gypsum cast of the impression. However, the quality of the outcome of the physical procedure depends on the level of experience of the dental technician.

More recently, computer algorithms for the estimation of hidden dental surfaces have been described. The computer algorithms suggested, e.g. in US 2019/321145 A1, rely on extrapolation of surfaces believed to represent the dentition. The distinction is however difficult to make, particularly when no other relevant data such as color photographs are available. Furthermore, such extrapolation methods depend on the choice of a rather simple mathematical model of only two-dimensional cross sections of surfaces that may not be appropriate generally.

US 2021/321872 A1 describes a method of determining a 3D model of a dental prosthesis. The described method relies on determining the margin line in order to determine a 3D model of the dental prosthesis. The document further describes a correction that may be performed to remove the representation of foreign material and show the underlying tooth surface and/or margin line.

US 2021/0059796 A1 describes a method to mark and/or correct margin lines, the method utilizing a trained machine learning model that has been trained to identify margin lines of preparation teeth, wherein the trained machine learning model outputs a probability map comprising, for each pixel in the image, a probability that the pixel depicts a margin line.

US 2007/0015111 A1 describes a method wherein a 3D virtual dental model of an intra oral cavity, in which at least a part of a finish line of a preparation is obscured, is manipulated to create, recreate or reconstruct finish line data corresponding to the obscured part. The document further describes that an auxiliary 3D virtual model corresponding to the obscured portion of the finish line is created.

All of the methods described in the state of the art involve one or more steps of recreating or determining the hidden part(s) of the preparation surface, such as the obscured part(s) of the margin line. However, in some cases, such approaches may be inaccurate, difficult, and cumbersome to carry out.

Therefore, there is a need for improved methods for designing dental prostheses; in particular, in situations where at least a part of the preparation surface is hidden or obscured from view.

## Summary

The present disclosure addresses the above-mentioned challenges by providing a system and method for designing a dental prosthesis, wherein at least a part of the surface of the dental prosthesis is determined independent of any estimate of hidden part(s) of the preparation surface. In other words, the presently disclosed method is able to automatically generate the design of a dental prosthesis, such as a dental crown, ideally without full knowledge of the margin line and/or preparation surface.

As previously mentioned, in many cases a foreign object covers, or partially covers, a part of the preparation surface. The preparation surface may be understood as the resulting surface of a tooth/teeth, which has been prepared for receiving a dental prosthesis. One way to obtain a preparation surface is to grind a tooth down, whereby a tooth preparation is obtained. The surface of the tooth preparation is also referred to as the preparation surface. The lower outer boundary of the preparation surface, hidden or not, is referred to herein as the preparation line. In the technical field of prosthodontics, this line is sometimes also referred to as the finish line or the margin line. Examples of foreign objects that could cover parts of the preparation surface, such as parts of the preparation line, include soft tissue such as the gingiva of the patient, debris from the grinded tooth/teeth, or saliva. The obscured/covered part of the preparation surface is referred to herein as the hidden part of the preparation surface.

One advantage of the presently disclosed method is that it does not require full knowledge of the preparation surface, nor does it require an estimation of the hidden parts of said surface. In other words, the method does not require any step to reconstruct any hidden surface of the tooth and/or preparation surface. Furthermore, the method ideally does not require any preliminary step of determining whether a foreign object, such as gingiva, hides any part of the preparation surface. Such a step could however be advantageous in some embodiments.

The presently disclosed system and method is useful for both intraoral scans, scans of dental impressions, and scans of stone models cast from dental impressions. All of the above can be affected by gingiva or other objects covering some part of the preparation surface. This is an advantage over the known art, such as US 2019/321145 A1, which is limited to handheld scanning devices, which in effect implies intraoral scanning devices.

The present disclosure provides an improved method for computer-aided design (CAD) of dental prostheses, based on a 3D scan of the relevant dentition including the preparation surface. The design of a dental prosthesis refers to the process of creating the shape and form of the prosthesis, generally described by its surface in 3D space. Examples of dental protheses comprise: crowns, bridges, inlays, onlays, and others. In computer-aided design, shape, form, and surface can be stored as data files that then can be used in computer-aided manufacturing (CAM).

The bottom of a dental prosthesis is understood to be the part of the prosthesis that is the furthest in the apical direction, when it is mounted to the preparation surface. In other words, the bottom of a dental prosthesis is the surface which is adapted to be fitted/mounted to the preparation surface, typically via a cement gap or cement layer. The wording 'to be fitted' may be understood as the ability to place and mount the dental prosthesis on the tooth preparation (comprising the preparation surface) in a dental procedure. As an example, the dental prosthesis may be a dental crown which is digitally designed and manufactured such that it can be fitted on the preparation (e.g. a stump) inside the mouth of a subject. The design of the dental prosthesis may result in a variety of different marginal finish lines such as knife edge, chamfer, deep chamfer, radial shoulder, radial shoulder with a bevel, or classic shoulder. In general, the shape of the tooth preparation may influence the digital design of the dental prosthesis and the resulting marginal finish line.

The shape of an ideal preparation near the bottom of the dental prosthesis typically depends on the material of the prosthesis. For example, for precious metal alloys, preparations should have feather edge, whereas for ceramic materials and especially for glass ceramic materials, preparations should have a shoulder edge. In dental CAD software, the main part of the outer surface of a dental prosthesis, such as an upper part of the outer surface, is typically designed interactively by a user, using digital shape manipulation tools. The outer surface should achieve good contacts to neighboring and antagonist dentition. Interaction between software and user is typically via a computer screen, where the software renders a 3D scene of dentition and prosthesis, wherein the user can manipulate the shape of the prosthesis, receiving immediate visual feedback.

The design of prosthesis bottoms in dental CAD software known in the art typically also requires the virtual marking of a preparation line, which is the (lower) outer boundary of the preparation surface. Inwards from the preparation line, cement gap is typically narrower than elsewhere on the intaglio. Especially for ceramic materials, outwards from the preparation line, the bottom surface of the prosthesis often has a collar consisting of a nearly flat band up to an angled transition to the main outer surface of the prosthesis, often called the die extension.

Dental CAD software known in the art often applies mechanistic design near the preparation surface. Mechanistic design typically requires some parameters as input but does not require interactive user input. Mechanistic design comprises offsetting the preparation surface to arrive at the inner surface of the prosthesis to realize a cement gap, with parameters describing, e. g., the desired thickness of the cement gap, any width and location relative to the boundary of the preparation surface of zones with smaller thickness, etc. Additional offset may be required due to the finite radius of a milling burr or drill, which may be larger than inner corner radius of the preparation surface. The radius would be another parameter entering mechanistic design. Mechanistic design can also comprise designing a collar outwards from the boundary of the preparation surface, where parameters are collar width, transition angles, and possibly others.

A further advantage of the presently disclosed method is that it does not require any manual marking nor any automatic determination or estimate of the entire preparation surface/line. At least one part of the surface of the dental prosthesis, such as the prosthesis bottom, is predicted from the scanned surface of the dentition alone. The scan should preferably include the area of the intended prosthesis, surrounding dentition and surrounding gingiva. Preferably, the scan should include all the visible parts of the preparation surface.

The method disclosed herein can be implemented in dental CAD software. As mentioned above, the present disclosure provides a method of designing a dental prosthesis, wherein at least one part of the prosthesis, such as the bottom part, is determined automatically without estimating any hidden parts of the preparation surface. Other parts of the prosthesis may be designed by other methods such as interactive design by a user in the CAD software, or such parts may be generated by other shape design algorithms, or by mechanistic algorithms.

Accordingly, the present disclosure relates to a computer-implemented method for designing a dental prosthesis, such as a dental crown, the method comprising the steps of:

- obtaining a digital 3D representation of a surface, the surface comprising at least a part of a preparation surface adapted to receive the dental prosthesis, wherein the preparation surface comprises a visible part and a hidden part which is obscured by a foreign object such as soft tissue;
- determining at least one part of a surface of the dental prosthesis using a statistical design model, wherein the at least one part is determined based on the digital 3D representation such that the dental prosthesis can be fitted to the preparation surface, wherein the at least one part is determined independent of any knowledge or estimate of the hidden part of the preparation surface; and
- digitally designing the dental prosthesis wherein the surface of the dental prosthesis comprises the at least one part.

The phrase 'without any knowledge' or 'independent of any knowledge' may be understood as the ability of e.g. the statistical model or trained machine-learning model to automatically generate at least a part of the dental prosthesis without knowing where e.g. the margin line is. Thus, the phrase primarily applies to the situation when the trained model is applied, and not during the training phase.

In some embodiments, the computer-implemented method comprises the steps of:

- obtaining a digital 3D representation of a preparation surface, said surface adapted to receive the dental prosthesis, wherein the preparation surface comprises a visible part and a hidden part which is obscured e.g. by a foreign object;
- digitally designing the dental prosthesis, wherein at least one part of the surface of the prosthesis is automatically generated using a trained machine-learning model, wherein the digital 3D representation of the preparation surface is inputted to the trained machine-learning model, wherein the machine-learning model has been trained to generate the at least one part of the surface independent of any estimate of the hidden part of the preparation surface.

In some embodiments, the computer-implemented method comprises the steps of:

- obtaining a digital 3D representation of a preparation surface, said surface adapted to receive the dental prosthesis, wherein the preparation surface comprises a visible part and a hidden part which is obscured e.g. by a foreign object;
- automatically generating at least one part of a surface of the dental prosthesis using a trained neural network, wherein the at least one part is generated based on the digital 3D representation such that the dental prosthesis can be fitted to the preparation surface, wherein the neural network has been trained to generate the at least one part independent of any estimate of the hidden part of the preparation surface; and
- digitally designing a 3D representation of the dental prosthesis wherein the dental prosthesis comprises the at least one part.

To calibrate a method according to the present disclosure, it may be advantageous to make use of at least one data set of 3D surfaces where hidden parts of preparation surfaces are known or estimated and annotated accordingly. As an example, said data set may constitute a training data set for a machine-learning model, such as a neural network.

The present disclosure further relates to a data processing system comprising one or more processors configured for carrying out the steps of any of the methods disclosed herein. The present disclosure further relates to a computer program comprising instructions which, when the program is executed by a computer, cause the computer to carry out the steps of any of the methods disclosed herein. The computer program may be stored on a computer-readable medium.

The present disclosure further relates to a system for digitally designing a dental prosthesis, such as a dental crown, the system comprising:

- a 3D scanning device for acquiring images of at least a part of a preparation surface adapted to receive the dental prosthesis; and
- a data processing system comprising one or more processors configured for carrying out the steps of any of the methods disclosed herein.

The present disclosure further relates to a method for manufacturing a dental prosthesis, the method comprising the steps of obtaining a digital design of the dental prosthesis, wherein the design is obtained by the computer-implemented method disclosed herein; and manufacturing the dental prosthesis based on the digital design, wherein the dental prosthesis is manufactured using a computer-aided manufacturing (CAM) device, such as a milling machine or a 3D printer.

The present disclosure further relates to a computer-implemented method of training a machine-learning model for designing a dental prosthesis, comprising: receiving an input training dataset comprising pairs of 3D scans of a preparation surface and corresponding prostheses designed by experienced dental technicians, where, in at least some of the pairs, at least a part of the preparation surface is obscured e.g. by gingiva or foreign material.

Accordingly, the present disclosure provides a system and method for designing a dental prosthesis, wherein the dental prosthesis is generated or designed to fit a preparation surface without any knowledge or estimate of potentially hidden surfaces of the preparation surface.

## Brief description of the drawings

Fig. 1 shows a cross section of a situation, where a tooth has been prepared by a dentist such that only a stump 120 is left.

Fig. 2A-2B illustrate a common problem encountered in prosthodontics, wherein gingiva has collapsed onto a preparation surface, such that a part of said surface is hidden below the gingiva.

Fig. 3 further illustrates the problem shown in fig. 2, and how it may negatively impact the design of a dental prosthesis if not accounted for.

Fig. 4 illustrates a flowchart of statistical design, namely defining 501, calibrating 502, and applying 503 a function F of equation (1) or a function F' of equation (2).

Fig. 5 shows the structure of a neural network that is suitable in steps 501-503 in an embodiment that utilizes 2D pseudo-images.

Fig. 6 illustrates a combination of mechanistic design for parts of the dental prosthesis with statistical design of prosthesis bottoms.

Fig. 7 illustrates another variant of combining mechanistic with statistical design. In this variant, both types of designs are applied to the bottom region of the prosthesis.

Fig. 8A-8B illustrates a way of merging two surfaces, e.g., obtained from mechanistic and statistical design, respectively.

Fig. 9 shows a schematic of a system suitable for digitally designing a dental prosthesis as disclosed herein.

Fig. 10 shows a schematic of a data processing system.

Fig. 11 shows a flowchart illustrating an embodiment of the presently disclosed method.

## Detailed Description

In preferred embodiments of the disclosed method, statistical design is employed to predict a part of the surface of the dental prosthesis. Statistical design may be understood as using a statistical model, such as a trained machine-learning model, to predict at least part of the shape of the dental prosthesis.

Preferably, a first step of the disclosed method is to obtain a digital 3D representation. This may be done by scanning a surface of interest, e.g., the preparation surface, using a 3D scanning device. The scan may be an intraoral scan, a scan of a dental impression, or a scan of a stone/gypsum model, which is cast from a dental impression. The scan may be acquired using an intraoral 3D scanning device; in particular if the preparation surface is to be scanned intraorally. As previously mentioned, oftentimes one or more foreign objects cover some parts of the preparation surface. Examples of foreign objects are soft tissue such as the gingiva, debris from the grinded tooth/teeth, or saliva. Therefore, the obtained 3D scan / 3D representation may comprise regions wherein the preparation surface is partly hidden because the foreign object(s) obscured the view when the surface was scanned.

The 3D scanning device may acquire scan data, such as images of the surface, and it may further process the scan data / images to obtain depth information of the surface. The scan data may be transmitted to a computer or processing unit, which is configured for generating the digital 3D representation based on the scan data / images. The generation of a digital 3D representation from scan data is generally well-known within the field of digital dentistry. It is further described in WO 2019/158442 A1 and WO 2014/000745 A1 by the same applicant.

In preferred embodiments, the digital 3D representation comprises 3D data of at least a part of the preparation surface adapted to receive the dental prosthesis, wherein the preparation surface comprises a visible part and a hidden part which is obscured by a foreign object such as soft tissue.

A next step of the disclosed method is to determine at least one part of a surface of the dental prosthesis using a statistical design model. The at least one part is determined based on the digital 3D representation such that the dental prosthesis can be fitted to the preparation surface.

The statistical design model can be expressed mathematically as

$$S_p = F(S_s) \ s.t. \ X \qquad (1)$$

where $S_p$ is the predicated shape of the dental prosthesis or part thereof, $S_s$ is the scanned surface, F is a function, and X is a set of conditions, which may in some embodiments be empty. The scanned surface may be represented by the digital 3D representation mentioned above. The surface may be represented mathematically as a point cloud, or a mesh of points and facets, or by basis functions of points' coordinates, or in other ways. The scanned surface / representation can be obtained by an intraoral scanning device, or from a scan of an impression, or from a scan of a stone model cast from the impression.

Statistical design comprises defining and applying a function F of equation (1). Preferably, statistical design further comprises calibration of the function F. The function F may be a machine-learning based function, such as a machine learning algorithm or a neural network. A definition typically comprises a choice of mathematical form and parameterization. Examples of mathematical forms are regression models and neural networks. Examples of parameterization are the choice of degree of a polynomial, or the choice of neural network structure, activations functions, and others. The calibration can include, e.g., least-squares fitting or neural network training, and others. Applying a function can be evaluation of the function in some software.

Because of their flexibility, neural networks are particularly suitable choices for the function F. The network could for instance have an encoder/decoder structure with skip connections. A U-Net architecture would be one such structure. Thus, in preferred embodiments, one or more steps of the disclosed method are carried out by a trained machine-learning model, such as a neural network, which has been trained to determine at least a part of the shape of a dental prosthesis based on a digital surface scan / digital representation of a preparation surface. In some embodiments, the at least one part of the shape corresponds to a bottom part of the dental prosthesis, said bottom part being configured to fit to the preparation surface. In some embodiments, the neural network is trained to output a full 3D representation of the dental prosthesis based on a digital representation of the preparation surface. In some cases, the digital surface scans are converted to a 2D data structure before being input to the neural network.

Inputs for the calibration should preferably be pairs $[S_p, S_s]$, i.e., designed prostheses for given surface scans. Preferably, the designs of the prostheses have been executed by experienced dental professionals. These dental professionals will recognize some gingiva or artefacts in the surfaces $S_s$ and design a prosthesis compensating for such artefact, geometrically penetrating that part of the observed surface. Thus, the neural network may have been trained using a training data set including a plurality of 3D surface representations and corresponding dental prostheses designed by one or more experienced dental technicians. The dental prostheses designed by the technicians may constitute the ground truth. The 3D surface representations may include a preparation surface, where, in at least some of the representations, the preparation surface is partly covered by a foreign object, such as gingiva. In some embodiments, the training data set comprises at least 10,000 pairs, each pair comprising a 3D surface representation and a corresponding designed dental prosthesis. The training of the neural network may be an iterative process, which may be repeated until the output from the neural network reaches a given accuracy or until the neural network is no longer able to improve its output. Accordingly, after a number of iterations, the output of the neural network may resemble the ground truth within a given precision and/or accuracy.

One way of calibration uses triplets $[S_p, S_s, S_{sx}]$, where at least some of the scans $S_s$ include gingiva and other scans $S_{sx}$ are modifications of the $S_s$, with any gingiva or foreign objects removed in software based on assessments performed by one or more dental professionals. Thus, in some embodiments, the neural network has been trained using a training data set including a plurality of triplets of 3D surface representations.

An advantageous way of calibration uses triplets $[S_p, S_s, S_{sc}]$, where at least some of the scans $S_s$ intentionally include gingiva and other scans $S_{sc}$ are re-scans of the $S_s$, but with any gingiva or foreign objects removed mechanically. In other words, in some cases the patients' dentition is scanned twice: both with and without gingiva or foreign objects covering some part of the preparation surface. The prosthesis is then designed based on $S_{sc}$, while the calibration remains based on $S_s$. The function $F$ thus learns to compensate for gingiva or foreign objects. The quality of predictions made with such a calibrated function should be higher than that of a function calibrated based on visual recognition of gingiva or foreign objects alone. Constraints $X$ may be introduced to impose some property on the predicted surface, e.g., smoothness or continuity.

In some embodiments, calibration exploits knowledge of a cement gap in pairs $[S_p, S_s]$ or triplets $[S_p, S_s, S_{sc}]$ to provide for a function $F$ that is normalized by a cement gap. For example, the scan surface $S_s$ in every dental design order to be used in the calibration could first be expanded by the cement gap known for that order. The calibration would then be normalized to a cement gap of zero. When using the calibrated model for a prediction, said prediction would also apply to a cement gap of zero. If the order for the prediction requests another cement gap, the first prediction could then be contracted by that gap.

In some embodiments of the presently disclosed method, the 3D representations $S_s$ are transformed by some transform $T$, and the predictions and the conditions are likewise transformed values,

$$T_p(S_p) = F'\big(T_s(S_s)\big) \ \ s.t. \ T_x(X) \qquad (2)$$

where $T_p$ and $T_x$ are the transforms of the predictions and the conditions, respectively; $F'$ is a function not necessarily derived from $F$ but related to $F$ by the domain transforms $T_p$ and $T_x$.

The transformation may form part of a pre-processing step of the method. The desired predicted surface $S_p$ is then found via an inverse transformation $T_p^{-1}$ as

$$S_p = T_p^{-1}(T_p(S_p)) \qquad (3)$$

In some embodiments, the existence of $T_p^{-1}$ is provided by suitable choice of at least one of $F'$ and $X$. In some embodiments, $T_p^{-1}$ is provided by approximation. If some $F'(T_s(S_s))$ is found not to be invertible, an approximate inverse $T_p^{-1}$ can be found by choosing function $\tilde{F}'$ for which $\tilde{F}'(a) \approx F'(a)$ for arguments $a$ in a range relevant for the intended application. In some embodiments where an approximate $T_p^{-1}$ gives a sufficiently good estimate, it is practical to use said approximation even if $F'(T_s(S_s))$ is not strictly invertible.

In some embodiments, the transform $T_s$ transforms a scanned 3D surface to a 2D representation. The 2D representation could comprise a scalar such as a distance of the surface $S_s$ to some reference plane, or a curvature, or other. The 2D representation can also comprise a vector such as a surface normal of the surface $S_s$, or other.

In some embodiments, the transform $T_s$ creates multiple independent representations, e.g., several 2D representations as per above, where each representation is restricted to some subset of the full surface. In an example of such an embodiment, the transform $T_s$ generates a set of 2D depth images taken from various viewpoints and angles relative to the 3D surface $S_s$.

It can be advantageous to transform to 2D space because the lower dimensionality can reduce computational requirements. It can also be advantageous to transform to 2D space because more standard algorithms and software exists for those, in particular neural networks. An example of a method for transforming a 3D mesh to 2D is mesh flattening as described in US 2020/0273248 A1.

Thus, the trained neural network may be configured to process 2-dimensional data wherein the 2-dimensional data may be obtained by converting 3-dimensional point clouds, e.g. by mesh flattening algorithms, to 2-dimensional data.

A 2D representation can be sampled in an equidistant grid to form a pseudo-image $I_s$ with pixel values. A pseudo-image has the same data structure as a traditional image but is not necessarily intelligible to a human. In cases where the 2D representation comprises vectors, each pixel will represent vectors. This can also be seen as the pseudo-image having multiple channels. Pseudo-images in the context of neural networks have been further described in WO 2020/161245 A1.

Many neural network structures have been published for 2D images and pseudo-images, e.g., Ronneberger, Olaf; Fischer, Philipp; Brox, Thomas (2015): U-Net: Convolutional Networks for Biomedical Image Segmentation, in: Medical Image Computing and Computer-Assisted Intervention - MICCAI 2015, Springer International Publishing, p. 234-241, ISBN 978-3-319-24574-4. Alternatively, the trained neural network may be capable of directly handling 3-dimensional (3D) point clouds. An example of such a network architecture is a PointNet neural network ("PointNet: Deep Learning on Point Sets for 3D Classification and Segmentation", Charles R. Qi, Hao Su, Kaichun Mo, Leonidas J. Guibas). Alternatively, PointNet++ or PointNet-like network architectures may be used for directly handling 3D point clouds.

In some embodiments, $T_p$ and $T_s$ are defined on the same 2D grid. For example, if $T_s$ yields pseudo-images $I_s$, and the predictions $F'(T_s(S_s))$ are other pseudo-images of the same dimension as the $I_s$, then the transform $T_p$ could be defined to also output pseudo-images of that same dimension.

In some embodiments, the transforms $T_p$ and $T_s$ are the same, which implies that $T_p^{-1} = T_s^{-1}$.

In some embodiments, the transform $T_p$ includes a representation of a conversion. For example, if the predictions $T_p(S_p) = F'(T_s(S_s))$ are differences of distances between an observed and a desired surface, then $T_p^{-1}$ can include an operation of offsetting the observed surface by the predicted values $F'(T_s(S_s))$. In some embodiments, $T_p^{-1}$ includes an operation of computing one or more distance fields. In some embodiments, $T_p^{-1}$ includes interpolation.

In some embodiments, distance fields are converted back to 3D meshes, e.g., by a marching cubes algorithm as described, e.g., in William E. Lorensen and Harvey E. Cline. 1987. Marching cubes: A high resolution 3D surface construction algorithm. SIGGRAPH Comput. Graph. 21, 4 (July 1987), 163-169.

In some embodiments, the conditions can be transformed in the same way as the scanned surface, i.e., $T_x = T_s$. In some situations, it may not be possible to transform a constraint, for example it may not be possible to transform a constraint in 3D space to 2D space. If so, the original constraint $X$ of equation (2) can be applied after the inverse transform $T_p^{-1}$.

In some embodiments, statistical design is combined with mechanistic design. The latter may be applied preferentially to intaglio and outer surface of the prosthesis away from the bottom.

Statistical design in some embodiments is used to predict only a bottom region of the prosthesis. In other embodiments, statistical and mechanistical design are both applied to the regions near the transition from or to the prosthesis bottom.

When combining statistical with mechanistic design, the two approaches may yield differing surfaces at or near the transition between the regions to which each was applied. Typically, this is the transition from bottom to remainder surface. The two different surfaces can then be merged. In some embodiments, constraints $X$ can be used to enforce continuity. In other embodiments, the two predicted surfaces can be stitched together. In other embodiments where both approaches are applied to the same region, some form of average surface can be found at or near the transition. Other operations such as smoothing, e.g., Laplacian smoothing, can be applied in merging, too.

In some embodiments, both statistical (e.g. machine-learning based) and mechanistic design are applied in the bottom region. This is relevant, e.g., when the material intended for the prosthesis must follow a particular shape in some sub-region of the bottom region as per manufacturer prescription. In such constellations, the mechanistic design should override the statistic one. While doing so, some characteristics of the statistical design may be preserved, e.g., by a least-squares or volume-preserving fit of a mechanistically designed sub-region to the statistical design of the overall bottom region. In some embodiments, a mechanistic design, or a part of the mechanistic design, is used as the input, or a part of the input, to the statistical design.

## Detailed description of the drawings

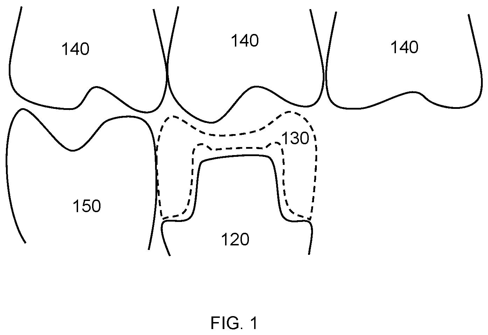

Figure 1 shows a cross section of a situation in the oral cavity that is relevant for this disclosure. A tooth has been prepared by a dentist such that only a stump 120 is left. The tooth material grinded away is to be replaced by a dental prosthesis 130 (here exemplified as a crown). Also shown is an adjacent tooth 150 and several teeth 140 on the antagonist jaw.

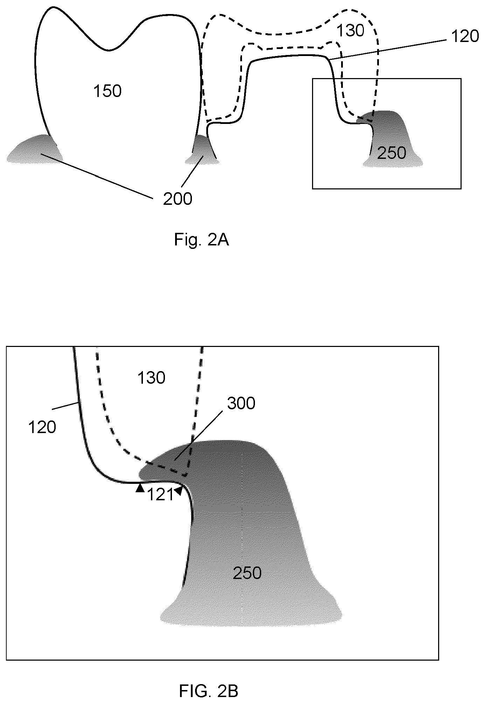

Figure 2A-2B illustrate a common problem encountered in intraoral scanning. Gingiva 200 fills some space between adjacent teeth. When a dentist removes tooth material, some surrounding gingiva 250 often collapses and covers part of the preparation surface 120, namely the zone 121 in the zoomed-in region shown in figure 2B. The zone 121 is also referred to herein as a hidden part 121 of the preparation surface 120. In this state, some of the collapsed gingiva occupies a volume 300 that a medically correct prosthesis 130 should eventually occupy. When a dental prosthesis is seated, usually after hours to weeks, gingiva has retracted naturally or can be pushed away by the dentist. Usually, the volume 300 is not intended to touch the zone 121, the thin region in between being intended for dental cement.

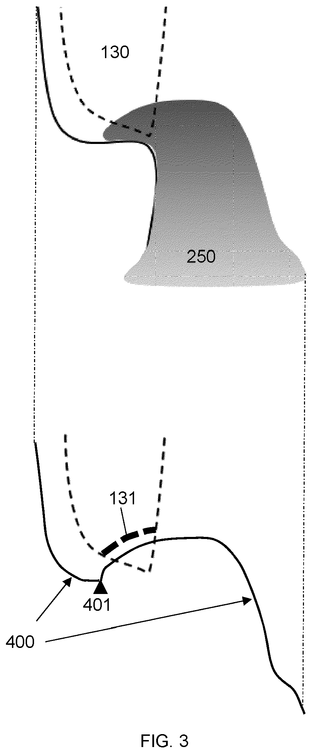

Figure 3 illustrates the problem caused by the situation of figures 2A-2B for the design of a dental prosthesis based on an intraoral scan or impression. The scanning device only detects a surface 400, said surface comprising a region with gingiva and a region with the preparation surface. A physical impression would similarly be limited to the surface 400. Using a color 3D scanning device it may be possible to differentiate the gingiva from the preparation surface based on color, thereby detecting a boundary 401. However, it would not be known if the boundary 401 is also the boundary of the preparation surface, i.e., the preparation line, which is not the situation figure 3. Mistakenly assuming the boundary 401 to be the boundary of the preparation surface would result in a prosthesis bottom design with section 131 closest to what was recorded as gingiva. Relative to the medically correct dental prosthesis design 130, there would be a gap that would like trap food and allow bacteria to penetrate towards the preparation surface, resulting in a reduced lifetime of the dental prosthesis.

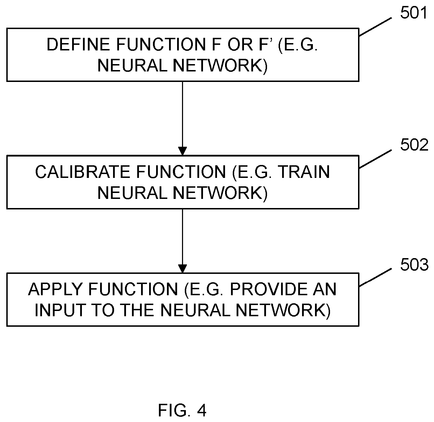

Figure 4 illustrates a flowchart of statistical design, namely defining 501, calibrating 502, and applying 503 a function $F$ of equation (1) or a function $F'$ of equation (2). In step 501, a suitable function $F$ or $F'$, respectively, is defined as a neural network. The network takes scans (e.g. digital 3D representations) as input and provides dental prosthesis surfaces as output, with special considerations of the prosthesis bottom as described in more detail below. The inputs to the calibration 502, specifically the training of the neural network, are preferably many pairs $[S_p, S_s]$ of 3D scans and corresponding prostheses designed by experienced dental technicians, such as more than 5,000 pairs, or more than 10,000 pairs. A 3D scan may also be referred to as a 3D surface model or a 3D surface representation. The pairs may be chosen randomly from cases encountered in dental practice, hence some of them will represent the situation of figures 2 and 3, i.e., gingiva covering the preparation surface to some degree, while in others, the entire preparation surface is represented in the scan. Experienced dental professionals can detect the situation of figures 2 and 3, i.e., suspect that parts of the preparation surface are hidden by gingiva in the scans. They generally make a best effort to design a dental prosthesis that they believe is appropriate for the true preparation surface. In the situation of figures 2 and 3, their design will collide with the gingiva in zone 300. Dental prosthesis design is typically done in dental CAD software such as 3Shape DentalSystem. In 3Shape DentalSystem, collisions are not allowed, but this can be circumvented by virtually removing some suspected gingiva material. Thus, such a step may be performed when preparing the training data for the neural network. In step 503, the function of step 502 is applied to scans not used in the training step 501. It predicts prosthesis shapes for manufacture.

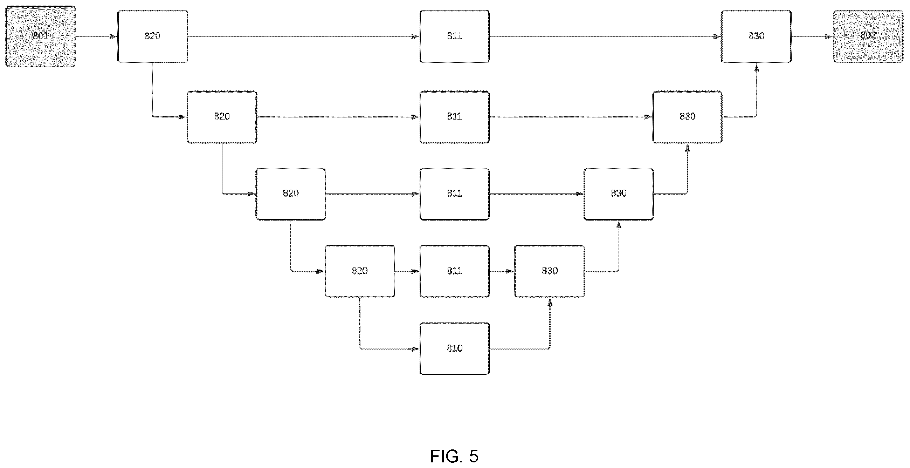

Figure 5 shows the structure of a neural network which is suitable as a function $F$ or $F'$ in steps 501-503 in an embodiment that utilizes 2D pseudo-images. The input 801, $T_s(S_s)$, is a flattened 2D pseudo-image of scanned surface including a prepared tooth surface and some surrounding gingiva. The encoder part of the neural network is configured to downsample the input in multiple steps 820, each time also applying convolutions and passing the output of those through non-linear functions. After the downsampling steps, the network applies a few convolutions 810, each one followed by non-linear functions. The final part of the network is the decoder which upsamples the output of the middle part in the same number of steps 830 as the encoder, with each step of the encoder having a skip connection 811 to the corresponding step in the decoder. A skip connection connects the output of the encoder step to the input of the decoder step through a series of convolutions and non-linear functions, appending that output to the input of the corresponding decoder step. The predicted surface can be determined as

$$S_p = T_p^{-1}(T_p(S_p)) = T_p^{-1}\big[F'\big(T_s(S_s)\big)\big]$$

To calculate $S_p$ from the network output $\Delta = F'(T_s(S_s))$, $T_p^{-1}$, the inverse of the transform $T_p$ needs to be defined. First the input surface $S_s$ can be defined as a signed distance field $D_s$

$$D_s(p) = C(p) * \min_{p_s \in S_s} (\|p - p_s\|), \ p \in \mathbb{R}^3$$

where $C(p)$ tells whether a point $p$ in 3D space is inside the surface of $S_s$

$$C(p) = \begin{cases} +1, & p \in S_s \\ -1, & p \notin S_s \end{cases}, \ p \in \mathbb{R}^3$$

The network parameters for the neural network of figure 5 are selected in such a way that the input and output are defined on the same 2D grid. The output 802, i.e., $\Delta = F'(T_s(S_s))$, is a 2D image of estimated signed distances between input and optimal die interface (predicted surface) with pixel values $\Delta_{ij}$. For a general point p, a value of $\Delta(T_s(p))$ can be found by subpixel interpolation between neighboring values $\Delta_{ij}$, using, e.g., bilinear interpolation.

Because input 801 and output 802 are defined on the same 2D grid, i.e., because pixels with same 3D coordinates correspond to same points in 3D space, the inverse transform $T_s^{-1}$ can be used for de-flattening, resulting in a 3D distance field $D_p$, representing the offset from the input surface.

$$D_p(p) = T_s^{-1}(\Delta(T_s(p))), \ p \in \mathbb{R}^3$$

The distance field representation $D$ of the predicted surface is then the sum of the de-flattened offset distance field $D_p$ and the distance field computed from the input surface $D_s$

$$D(p) = D_s(p) + D_p(p) = C(p) * \min_{p_s \in S_s}(\|p - p_s\|) + T_s^{-1}(\Delta(T_s(p))), \quad p \in \mathbb{R}^3$$

The predicted surface can then be reconstructed using a meshing algorithm $\mathcal{M}$, such as the Marching Cube algorithm,

$$S_p = \mathcal{M}(D(p \mid p \in \mathbb{R}^3))$$

where the points $p$ are chosen in a 3D grid chosen large enough to encapsulate the surface $S_p$.

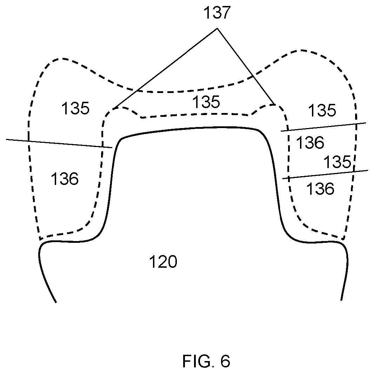

Figure 6 illustrates a combination of mechanistic design for parts of the dental prosthesis with statistical design of prosthesis bottoms. In principle, statistical design can predict the entire prosthesis shape. However, only the bottom 136 of the prosthesis can be affected by gingiva, and therefore it is particularly advantageous to design that part according to steps 501-503. The top part 135 may be designed using a traditional mechanistic approach. The mechanistic approach typically includes compensation 137 for drill head radius, that radius being a parameter. It also ascertains a prescribed minimum thickness, another parameter, which is particularly important in the occlusal zone. This figure also illustrates two ways of merging regions of mechanistic design 135 with regions of statistical design 136. On the left side of the figure, the regions are non-overlapping, while on the right, they are overlapping because both types of design were applied to some same region.

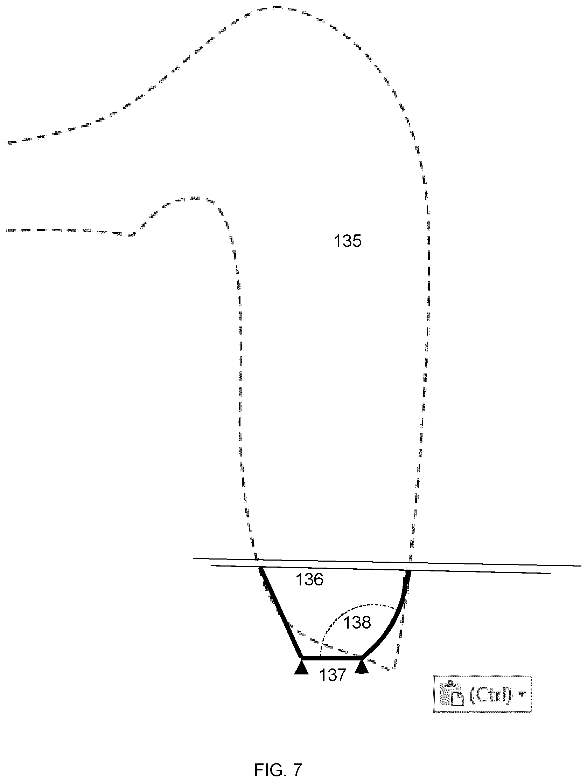

Figure 7 illustrates another variant of combining mechanistic with statistical design. In this variant, both types of designs are applied to the bottom region of the prosthesis. The mechanistic design takes into account certain parameters often prescribed by prosthesis material manufactures, such as the width of a die offset zone 137 and an angle 138 between the offset zone and a first part of the prosthesis outer surface. The mechanistical design overrules the statistical one in sub-regions where the statistical design does not realize the prescribed parameters, effectively enforcing constraints $X$. At the same time, the total volume of the statistical design of the prosthesis bottom is preserved.

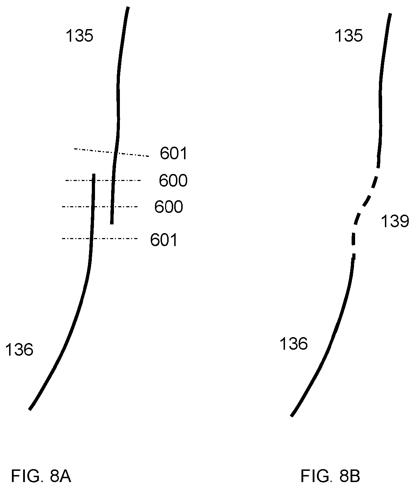

Figures 8A-8B illustrates a way of merging two surfaces, e.g., obtained from mechanistic and statistical design, respectively. The surfaces predicted by mechanistic design 136 and statistical design for the prosthesis bottom 135 do not match perfectly in the situation in the figure. They can be merged by forming an average surface in the direction of surface normals 600. The midpoints of the two surfaces are taken as the new average surface. Up to some distance away from the points where the normals hit more than one surface, delineated by normals 601, the final surface can then be smoothed to achieve a smooth transition.

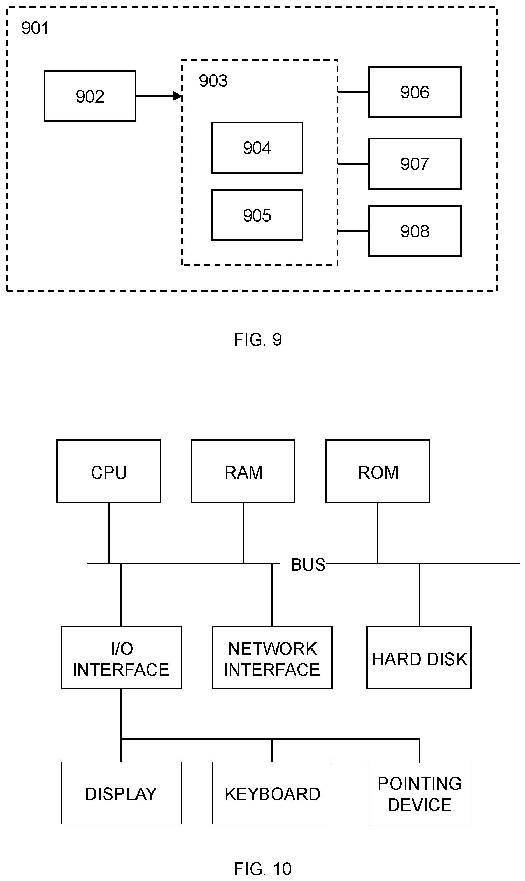

Figure 9 shows a schematic of a system suitable for digitally designing a dental prosthesis as disclosed herein. The system 901 comprises a data processing system 903 comprising a computer-readable medium 904 and a processor 905. The system further comprises a display 906, a computer keyboard 907 and a pointing device 908 for entering data and activating virtual buttons visualized on the display 906. As an example, the display 906 can be a computer screen. The data processing system 903 is configured for receiving a digital 3D representation of the patient's jaw/oral cavity from a scanning device 902, such as an intraoral scanning device, and/or configured for receiving scan data from the scanning device 902 and generating a digital 3D representation of the patient's jaw/oral cavity based on such scan data. The received or generated digital 3D representation may be stored in the computer-readable medium 904 and provided to the processor 905. The processor 905 is configured for performing the steps of the method disclosed herein. The system may further comprise a unit (not shown) for transmitting the digital design of the dental prosthesis to e.g. a computer-aided manufacturing (CAM) device (not shown), such as a milling machine or a 3D printer.

Figure 10 shows a schematic of a data processing system. The data processing system may comprise a processor such as a central processing unit (CPU), which is configured to read and execute instructions stored in a computer memory, which may take the form of volatile memory such as random-access memory (RAM). The computer memory stores instructions for execution by the processor and data used by those instructions. For example, the instructions may relate to the methods disclosed herein, such as the determination of the at least one part of a surface of the dental prosthesis. The data processing system may further comprise non-volatile storage, e.g. in the form of a hard disk. The data processing system may further comprise an I/O interface to which other devices may be connected. Such devices may include display(s), keyboard(s), and pointing device(s) e.g. a mouse. The display is configured to display a 2D rendition of the digital 3D representation and/or a rendition of the dental prosthesis. A user may interact with the data processing system via a keyboard and/or a pointing device. A network interface allows the data processing system to be connected to an appropriate computer network in order to receive and transmit data from and to other computing devices. The processor, computer memory (RAM/ROM), hard disk, I/O interface, and network interface are preferably connected together by a bus.

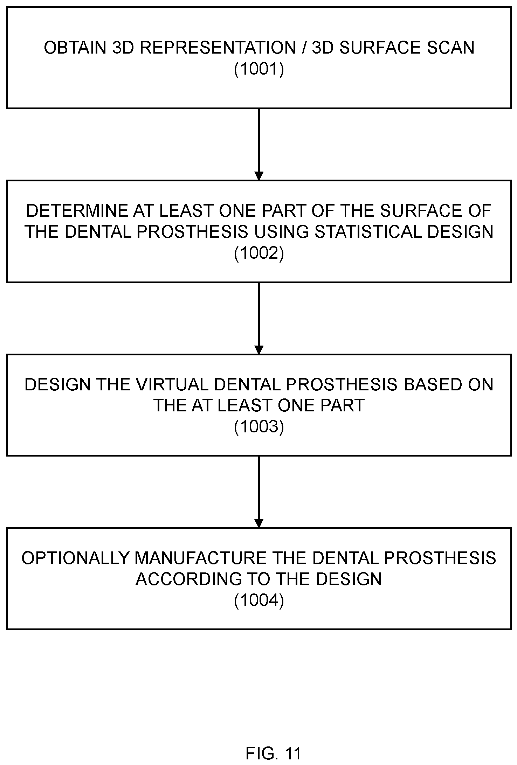

Figure 11 shows a flowchart illustrating an embodiment of the presently disclosed method. In step 1001, a digital 3D representation is obtained. The digital 3D representation may be obtained by acquiring scan data of a surface using a 3D scanning device. The digital 3D representation may then be generated based on the scan data. The 3D representation may be generated on the scanning device or it may be generated by the data processing system.

In step 1002, at least one part of the surface of the dental prosthesis is determined using statistical design. In preferred embodiments, the at least one part is determined automatically using a neural network, which has been trained to determine the part even in situations where parts of the preparation surface were hidden in the 3D representation. In step 1003, the dental prosthesis is designed based on the at least one part determined in step 1002. In preferred embodiments, the at least one part is a bottom part of the dental prosthesis, wherein the bottom part is understood to be the part configured to interface the preparation surface, possibly via a cement gap. The dental prosthesis may be designed by statistical design, mechanistic design, or a combination hereof. In a final step 1004, the dental prosthesis may be manufactured according to the design. The manufacturing may be performed by a computer-aided manufacturing (CAM) device, such as a milling machine or a 3D printer.

Although some embodiments have been described and shown in detail, the disclosure is not restricted to such details, but may also be embodied in other ways within the scope of the subject matter defined in the following claims. In particular, it is to be understood that other embodiments may be utilized, and structural and functional modifications may be made without departing from the scope of the present disclosure. Furthermore, the skilled person would find it apparent that unless an embodiment is specifically presented only as an alternative, different disclosed embodiments may be combined to achieve a specific implementation and such specific implementation is within the scope of the disclosure.

A claim may refer to any of the preceding claims, and "any" is understood to mean "any one or more" of the preceding claims.

It should be emphasized that the term "comprises/ comprising/ including" when used in this specification is taken to specify the presence of stated features, integers, operations, steps or components but does not preclude the presence or addition of one or more other features, integers, steps, components or groups thereof.

In claims enumerating several means, several of these means can be embodied by one and the same item of hardware. The mere fact that certain measures are recited in mutually different dependent claims or described in different embodiments does not indicate that a combination of these measures cannot be used to advantage.

**Claims**

1. A computer-implemented method for designing a dental prosthesis (130), the method comprising the steps of:

   - obtaining (1001) a digital 3D representation of a surface, the surface comprising at least a part of a preparation surface adapted to receive the dental prosthesis, wherein the preparation surface comprises a visible part and a hidden part which is obscured by a foreign object;
   - determining (1002) at least one part of a surface of the dental prosthesis using a trained neural network, wherein the at least one part is determined based on the digital 3D representation such that the dental prosthesis can be fitted to the preparation surface, wherein the at least one part is determined independent of any estimate of the hidden part of the preparation surface; and
   - digitally designing (1004) the dental prosthesis wherein the surface of the dental prosthesis comprises the at least one part.

2. The method according to claim 1, wherein the neural network has been trained using a training data set, the training data set including a plurality of 3D surface representations and corresponding dental prostheses designed by one or more experienced dental technicians.

3. The method according to claim 2, wherein the 3D surface representations include a preparation surface, and wherein in at least some of the representations, the preparation surface is partly covered by a foreign object, such as gingiva.

4. The method according to any of the claims 2-3, wherein the training data set comprises at least 10,000 pairs, each pair comprising a 3D surface representation and a corresponding designed dental prosthesis.

5. The method according to any of the preceding claims, wherein the neural network has been trained using a training data set, the training data set including a plurality of triplets of 3D surface representations.

6. The method according to claim 5, wherein each triplet includes:

- a 3D surface representation of a preparation surface, wherein the preparation surface comprises a hidden part obscured by a foreign object;
- a 3D surface representation of the same preparation surface, wherein the foreign object has been removed such that the preparation surface is fully visible;
- a 3D surface representation of a dental prothesis designed to be fitted to the preparation surface, wherein the dental prothesis has been designed by one or more experienced dental technicians.

7. The method according to any of the preceding claims, wherein the at least one part comprises a bottom part of the dental prosthesis.

8. The method according to any of the preceding claims, wherein the least one part is configured to connect to the preparation surface, optionally via a cement layer.

9. The method according to any of the preceding claims, wherein at least a part of the digital 3D representation is transformed to a 2D representation.

10. The method according to claim 9, wherein the 2D representation is a distance field representation, a vector field representation, or a combination thereof.

11. The method according to any of the preceding claims, wherein at least a part of the digital 3D representation is transformed to a plurality of 2D representations, wherein each 2D representation represents a part of the digital 3D representation.

12. The method according to claim 11, wherein a plurality of 2D images are generated from the digital 3D representation, wherein the images are generated from various viewpoints and/or angles relative to a surface of the digital 3D representation.

13. The method according to any of the preceding claims, wherein each of the 2D representations constitutes a pseudo-image comprising pixel values.

14. The method according to claim 13, wherein each pixel in the pseudo-image is represented as a vector comprising a plurality of channels.

15. The method according to any of the preceding claims, wherein the neural network is configured to receive as input one or more 2D representations, wherein each representation comprises data associated with the scanned surface.

16. The method according to claim 15, wherein the neural network comprises an encoder configured to down-sample the input in one or more steps, wherein a convolution is applied at each step.

17. The method according to any of the preceding claims, wherein a first part of the dental prosthesis is designed using statistical design, and a second part of the dental prosthesis is designed using a mechanistic design, wherein the first part is configured to connect to the preparation surface via a cement layer.

18. A data processing apparatus comprising one or more processors (905) configured to perform the steps of the method according to any of the preceding claims.

19. A computer program product comprising instructions which, when the program is executed by a computer, cause the computer to carry out the steps of the method according to any of the claims 1-17.

20. A computer-readable storage medium (904) comprising instructions which, when executed by a computer, cause the computer to carry out the steps of the method according to any of the claims 1-17.

21. A system (901) for digitally designing a dental prosthesis, the system comprising

- a 3D scanning device (902) for acquiring images of a preparation surface adapted to receive the dental prosthesis; and
- a data processing system (903) comprising one or more processors configured to carry out the steps of the method according to any of the claims 1-17.

22. The system according to claim 21, wherein the 3D scanning device is an intraoral 3D scanning device for acquiring images inside an oral cavity of a subject.

**Patentansprüche**

1. Computerimplementiertes Verfahren zum Entwerfen einer Zahnprothese (130), wobei das Verfahren die folgenden Schritte umfasst:

   - Erhalten (1001) einer digitalen 3D-Darstellung einer Oberfläche, wobei die Oberfläche mindestens einen Teil einer Präparationsoberfläche umfasst, die geeignet ist, die Zahnprothese aufzunehmen, wobei die Präparationsoberfläche einen sichtbaren Teil und einen verborgenen Teil umfasst, der von einem Fremdkörper verdeckt wird;
   - Bestimmen (1002) mindestens eines Teils einer Oberfläche der Zahnprothese unter Verwendung eines trainierten neuronalen Netzwerks, wobei der mindestens eine Teil auf Basis der digitalen 3D-Darstellung derart bestimmt wird, dass die Zahnprothese in die Präparationsoberfläche eingepasst werden kann, wobei der mindestens eine Teil unabhängig von einer Schätzung des verborgenen Teils der Präparationsoberfläche bestimmt wird; und
   - digitales Entwerfen (1004) der Zahnprothese, wobei die Oberfläche der Zahnprothese den mindestens einen Teil umfasst.

2. Verfahren nach Anspruch 1, wobei das neuronale Netzwerk unter Verwendung eines Trainingsdatensatzes trainiert wurde, wobei der Trainingsdatensatz eine Vielzahl von 3D-Oberflächendarstellungen und entsprechende Zahnprothesen beinhaltet, die von einem oder mehreren erfahrenen Zahntechnikern entworfen wurden.

3. Verfahren nach Anspruch 2, wobei die 3D-Oberflächendarstellungen eine Präparationsoberfläche beinhalten und wobei in mindestens einigen der Darstellungen die Präparationsoberfläche teilweise von einem Fremdkörper, wie etwa Zahnfleisch, bedeckt wird.

4. Verfahren nach einem der Ansprüche 2-3, wobei der Trainingsdatensatz mindestens 10.000 Paare umfasst, wobei jedes Paar eine 3D-Oberflächendarstellung und eine entsprechend entworfene Zahnprothese umfasst.

5. Verfahren nach einem der vorstehenden Ansprüche, wobei das neuronale Netzwerk unter Verwendung eines Trainingsdatensatzes trainiert wurde, wobei der Trainingsdatensatz eine Vielzahl von Tripletts von 3D-Oberflächendarstellungen beinhaltet.

6. Verfahren nach Anspruch 5, wobei jedes Triplett beinhaltet:

   - eine 3D-Oberflächendarstellung einer Präparationsoberfläche, wobei die Präparationsoberfläche einen verborgenen Teil umfasst, der von einem Fremdkörper verdeckt wird;
   - eine 3D-Oberflächendarstellung derselben Präparationsoberfläche, wobei der Fremdkörper entfernt wurde, sodass die Präparationsoberfläche vollständig sichtbar ist;
   - eine 3D-Oberflächendarstellung einer Zahnprothese, die so entworfen ist, dass sie in die Präparationsoberfläche eingepasst werden kann, wobei die Zahnprothese von einem oder mehreren erfahrenen Zahntechnikern entworfen wurde.

7. Verfahren nach einem der vorstehenden Ansprüche, wobei der mindestens eine Teil einen unteren Teil der Zahnprothese umfasst.

8. Verfahren nach einem der vorstehenden Ansprüche, wobei der mindestens eine Teil so konfiguriert ist, dass er, gegebenenfalls über eine Zementschicht, mit der Präparationsoberfläche verbunden werden kann.

9. Verfahren nach einem der vorstehenden Ansprüche, wobei mindestens ein Teil der digitalen 3D-Darstellung in eine 2D-Darstellung umgewandelt wird.

10. Verfahren nach Anspruch 9, wobei die 2D-Darstellung eine Distanzfelddarstellung, eine Vektorfelddarstellung oder eine Kombination davon ist.

11. Verfahren nach einem der vorstehenden Ansprüche, wobei mindestens ein Teil der digitalen 3D-Darstellung in eine Vielzahl von 2D-Darstellungen umgewandelt wird, wobei jede 2D-Darstellung einen Teil der digitalen 3D-Darstellung darstellt.

12. Verfahren nach Anspruch 11, wobei aus der digitalen 3D-Darstellung eine Vielzahl von 2D-Bildern erzeugt werden, wobei die Bilder aus verschiedenen Blickwinkeln und/oder Winkeln relativ zu einer Oberfläche der digitalen 3D-Darstellung erzeugt werden.

13. Verfahren nach einem der vorstehenden Ansprüche, wobei jede der 2D-Darstellungen ein Pseudobild darstellt, das Pixelwerte umfasst.

14. Verfahren nach Anspruch 13, wobei jedes Pixel im Pseudobild als ein Vektor dargestellt wird, der eine Vielzahl von Kanälen umfasst.

15. Verfahren nach einem der vorstehenden Ansprüche, wobei das neuronale Netzwerk so konfiguriert ist, dass es als Eingabe eine oder mehrere 2D-Darstellungen empfängt, wobei jede Darstellung Daten umfasst, die der gescannten Oberfläche zugeordnet sind.

16. Verfahren nach Anspruch 15, wobei das neuronale Netzwerk einen Encoder umfasst, der so konfiguriert ist, dass er die Eingabe in einem oder mehreren Schritten heruntersampelt, wobei bei jedem Schritt eine Faltung angewendet wird.

17. Verfahren nach einem der vorstehenden Ansprüche, wobei ein erster Teil der Zahnprothese unter Verwendung von statistischen Design entworfen wird und ein zweiter Teil der Zahnprothese unter Verwendung eines mechanistischen Designs entworfen wird, wobei der erste Teil so konfiguriert ist, dass er über eine Zementschicht mit der Präparationsoberfläche verbunden werden kann.

18. Datenverarbeitungseinrichtung, die einen oder mehrere Prozessoren (905) umfasst, die so konfiguriert sind, dass sie die Schritte des Verfahrens nach einem der vorstehenden Ansprüche durchführen.

19. Computerprogrammprodukt, das Anweisungen umfasst, die, wenn das Programm von einem Computer ausgeführt wird, bewirken, dass der Computer die Schritte des Verfahrens nach einem der Ansprüche 1-17 ausführt.

20. Computerlesbares Speichermedium (904), das Anweisungen umfasst, die, wenn sie von einem Computer ausgeführt werden, den Computer veranlassen, die Schritte des Verfahrens nach einem der Ansprüche 1-17 auszuführen.

21. System (901) zum digitalen Entwerfen einer Zahnprothese, wobei das System umfasst:

- eine 3D-Scanvorrichtung (902) zum Erfassen von Bildern einer Präparationsoberfläche, die geeignet ist, die Zahnprothese aufzunehmen; und
- ein Datenverarbeitungssystem (903), das einen oder mehrere Prozessoren umfasst, die so konfiguriert sind, dass sie die Schritte des Verfahrens nach einem der Ansprüche 1-17 ausführen.

22. System nach Anspruch 21, wobei die 3D-Scanvorrichtung eine intraorale 3D-Scanvorrichtung zum Erfassen von Bildern im Inneren einer Mundhöhle eines Subjekts ist.

**Revendications**

1. Procédé mis en œuvre par ordinateur pour concevoir une prothèse dentaire (130), le procédé comprenant les étapes de :

- obtention (1001) d'une représentation numérique 3D d'une surface, la surface comprenant au moins une partie d'une surface de préparation conçue pour recevoir la prothèse dentaire, dans lequel la surface de préparation comprend une partie visible et une partie cachée qui est masquée par un objet étranger ;
- détermination (1002) d'au moins une partie d'une surface de la prothèse dentaire en utilisant un réseau neuronal formé, dans lequel la au moins une partie est déterminée sur la base de la représentation numérique 3D de telle sorte que la prothèse dentaire puisse être adaptée à la surface de préparation, dans lequel la au moins une partie est déterminée indépendamment de toute estimation de la partie cachée de la surface de préparation ; et

- conception numérique (1004) de la prothèse dentaire, dans lequel la surface de la prothèse dentaire comprend la au moins une partie.

2. Procédé selon la revendication 1, dans lequel le réseau neuronal a été formé en utilisant un ensemble de données de formation, l'ensemble de données de formation incluant une pluralité de représentations de surface 3D et de prothèses dentaires correspondantes conçues par un ou plusieurs techniciens dentaires expérimentés.

3. Procédé selon la revendication 2, dans lequel les représentations de surface 3D incluent une surface de préparation, et dans lequel dans au moins certaines des représentations, la surface de préparation est partiellement recouverte par un objet étranger, tel qu'une gencive.

4. Procédé selon l'une quelconque des revendications 2-3, dans lequel l'ensemble de données de formation comprend au moins 10 000 paires, chaque paire comprenant une représentation de surface 3D et une prothèse dentaire conçue correspondante.

5. Procédé selon l'une quelconque des revendications précédentes, dans lequel le réseau neuronal a été formé en utilisant un ensemble de données de formation, l'ensemble de données de formation incluant une pluralité de triplets de représentations de surface 3D.

6. Procédé selon la revendication 5, dans lequel chaque triplet inclut :

- une représentation de surface 3D d'une surface de préparation, dans lequel la surface de préparation comprend une partie cachée masquée par un objet étranger ;
- une représentation de surface 3D de la même surface de préparation, dans lequel l'objet étranger a été retiré de telle sorte que la surface de préparation est entièrement visible ;
- une représentation de surface 3D d'une prothèse dentaire conçue pour être adaptée à la surface de préparation, dans lequel la prothèse dentaire a été conçue par un ou plusieurs techniciens dentaires expérimentés.

7. Procédé selon l'une quelconque des revendications précédentes, dans lequel la au moins une partie comprend une partie inférieure de la prothèse dentaire.

8. Procédé selon l'une quelconque des revendications précédentes, dans lequel la au moins une partie est configurée pour être reliée à la surface de préparation, éventuellement par l'intermédiaire d'une couche de ciment.

9. Procédé selon l'une quelconque des revendications précédentes, dans lequel au moins une partie de la représentation numérique 3D est transformée en une représentation 2D.

10. Procédé selon la revendication 9, dans lequel la représentation 2D est une représentation de champ de distance, une représentation de champ vectoriel ou une combinaison de celles-ci.

11. Procédé selon l'une quelconque des revendications précédentes, dans lequel au moins une partie de la représentation 3D numérique est transformée en une pluralité de représentations 2D, dans lequel chaque représentation 2D représente une partie de la représentation 3D numérique.

12. Procédé selon la revendication 11, dans lequel une pluralité d'images 2D sont générées à partir de la représentation numérique 3D, dans lequel les images sont générées à partir de différents points de vue et/ou angles par rapport à une surface de la représentation numérique 3D.

13. Procédé selon l'une quelconque des revendications précédentes, dans lequel chacune des représentations 2D constitue une pseudo-image comprenant des valeurs de pixels.

14. Procédé selon la revendication 13, dans lequel chaque pixel de la pseudo-image est représenté sous la forme d'un vecteur comprenant une pluralité de canaux.

15. Procédé selon l'une quelconque des revendications précédentes, dans lequel le réseau neuronal est configuré pour recevoir en entrée une ou plusieurs représentations 2D, dans lequel chaque représentation comprend des données associées à la surface numérisée.

**16.** Procédé selon la revendication 15, dans lequel le réseau neuronal comprend un codeur configuré pour sous-échantillonner l'entrée en une ou plusieurs étapes, dans lequel une convolution est appliquée à chaque étape.

**17.** Procédé selon l'une quelconque des revendications précédentes, dans lequel une première partie de la prothèse dentaire est conçue en utilisant une conception statistique, et une seconde partie de la prothèse dentaire est conçue en utilisant une conception mécaniste, dans lequel la première partie est configurée pour être reliée à la surface de préparation par l'intermédiaire d'une couche de ciment.

**18.** Appareil de traitement de données comprenant un ou plusieurs processeurs (905) configurés pour effectuer les étapes du procédé selon l'une quelconque des revendications précédentes.

**19.** Produit de programme informatique comprenant des instructions qui, lorsque le programme est exécuté par un ordinateur, amènent l'ordinateur à effectuer les étapes du procédé selon l'une quelconque des revendications 1-17.

**20.** Support de stockage lisible par ordinateur (904) comprenant des instructions qui, lorsqu'elles sont exécutées par un ordinateur, amènent l'ordinateur à effectuer les étapes du procédé selon l'une quelconque des revendications 1-17.

**21.** Système (901) de conception numérique d'une prothèse dentaire, le système comprenant :

   - un dispositif de numérisation 3D (902) permettant d'acquérir des images d'une surface de préparation conçue pour recevoir la prothèse dentaire ; et
   - un système de traitement de données (903) comprenant un ou plusieurs processeurs configurés pour effectuer les étapes du procédé selon l'une quelconque des revendications 1-17.

**22.** Système selon la revendication 21, dans lequel le dispositif de numérisation 3D est un dispositif de numérisation 3D intra-oral pour acquérir des images à l'intérieur d'une cavité buccale d'un sujet.

FIG. 1

Fig. 2A

FIG. 2B

FIG. 3

DEFINE FUNCTION F OR F' (E.G. NEURAL NETWORK) — 501

CALIBRATE FUNCTION (E.G. TRAIN NEURAL NETWORK) — 502

APPLY FUNCTION (E.G. PROVIDE AN INPUT TO THE NEURAL NETWORK) — 503

FIG. 4

FIG. 5

FIG. 6

135

136

138

137

(Ctrl) ▾

FIG. 7

135

601

600

600

601

136

FIG. 8A

135

139

136

FIG. 8B

901

902 → 903

904

905

906

907

908

FIG. 9

CPU    RAM    ROM

BUS

I/O INTERFACE    NETWORK INTERFACE    HARD DISK

DISPLAY    KEYBOARD    POINTING DEVICE

FIG. 10

OBTAIN 3D REPRESENTATION / 3D SURFACE SCAN
(1001)

DETERMINE AT LEAST ONE PART OF THE SURFACE OF
THE DENTAL PROSTHESIS USING STATISTICAL DESIGN
(1002)

DESIGN THE VIRTUAL DENTAL PROSTHESIS BASED ON
THE AT LEAST ONE PART
(1003)

OPTIONALLY MANUFACTURE THE DENTAL PROSTHESIS
ACCORDING TO THE DESIGN
(1004)

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019321145 A1
- US 2021321872 A1
- US 20210059796 A1
- US 20070015111 A1
- WO 2019158442 A1
- WO 2014000745 A1
- US 20200273248 A1
- WO 2020161245 A1

**Non-patent literature cited in the description**

- U-Net: Convolutional Networks for Biomedical Image Segmentation. **RONNEBERGER, OLAF ; FISCHER, PHILIPP ; BROX, THOMAS**. Medical Image Computing and Computer-Assisted Intervention - MICCAI. Springer International Publishing, 2015, 234-241
- **CHARLES R. QI ; HAO SU ; KAICHUN MO ; LEONIDAS J. GUIBAS**. *PointNet: Deep Learning on Point Sets for 3D Classification and Segmentation*
- **WILLIAM E. LORENSEN ; HARVEY E. CLINE.** Marching cubes: A high resolution 3D surface construction algorithm.. *SIGGRAPH Comput. Graph.*, July 1987, vol. 21 (4), 163-169